# EUROPEAN PATENT SPECIFICATION

(11) **EP 2 918 808 B1**
(45) Date of publication and mention of the grant of the patent: **14.11.2018**
(21) Application number: 13849524.7
(22) Date of filing: 24.09.2013
(51) Int. Cl.: F01N 3/24, B01D 53/94, F01N 3/08, F01N 3/28, F01N 3/36

(54) **EXHAUST GAS PURIFICATION DEVICE FOR DIESEL ENGINE**
ABGASREINIGUNGSVORRICHTUNG FÜR EINEN DIESELMOTOR
DISPOSITIF D'ÉPURATION DES GAZ D'ÉCHAPPEMENT D'UN MOTEUR DIESEL

(30) Priority: 26.10.2012 JP 2012237017
(43) Date of publication of application: 16.09.2015
(73) Proprietor: Isuzu Motors, Ltd., Shinagawa-Ku Tokyo 140-8722 (JP)
(72) Inventor: OHARA, Isao, Fujisawa-shi, Kanagawa 252-0881 (JP); UEDA, Yoshihisa, Fujisawa-shi, Kanagawa 252-0881 (JP); HIRAKI, Nobuyuki, Fujisawa-shi, Kanagawa 252-0881 (JP)
(74) Representative: WSL Patentanwälte Partnerschaft mbB
(86) International application number: PCT/JP2013/075711
(87) International publication number: WO 2014/065059

(56) References cited:
- JP-A- 2006 316 654
- JP-A- 2011 241 732
- JP-A- 2011 241 732
- JP-A- 2013 127 208
- JP-A- 2013 167 157
- US-A1- 2009 000 287

## Description

### TECHNICAL FIELD

The present invention relates to an exhaust gas purification device for a diesel engine, and more specifically to an exhaust gas purification device for a diesel engine in which a NOx reduction and purification catalyst can be prevented from being broken by penetration of a reductant into a supporting member of the catalyst, while improving performance of the catalyst.

### BACKGROUND ART

To reduce the emission of nitrogen oxides (NOx) contained in exhaust gas of diesel engines to the air, exhaust gas purification devices have been developed in which NOx reduction and purification catalysts such as selective catalytic reduction (SCR: Selective Catalystic Reduction) catalysts and NOx trap reduction-type catalysts (LNT: Lean NOx Traps) are used.

In an exhaust gas purification device based on the former SCR catalyst, NOx are removed by causing ammonia (NH₃) generated by hydrolysis of aqueous urea injected into exhaust gas to act as a reductant in the presence of the SCR catalyst. The SCR catalyst is composed of a formed article obtained by applying a slurry containing a zeolite catalyst such as iron ion-exchanged aluminosilicate onto a support such as a ceramic honeycomb, or the like.

Meanwhile, in an exhaust gas purification device based on the latter LNT, NOx in exhaust gas are temporarily trapped by a NOx trap material (an alkali metal or alkaline earth metal such as K or Ba) in a lean state. Then, the trapped NOx are released periodically by supplying an unburned fuel (HC) to the exhaust gas to achieve a rich state, and the released NOx are reduced by the three-way function. The LNT is composed of a formed article in which a NOx trap material formed from a noble metal catalyst such as platinum, an alkaline earth metal such as barium, and the like is supported on a catalyst support, or the like.

In general, such a NOx reduction and purification catalyst is installed in a spindle-shaped or cylindrical converter being installed in an exhaust pipe and having a large diameter, with a supporting member such as a heat-resistant sponge provided therebetween. For this reason, aqueous urea or HCs which are not decomposed but are attached to an inner surface of the exhaust pipe are accumulated on a bottom portion of the exhaust pipe, and penetrate into the supporting member. In this case, the aqueous urea or HCs solidify and expand with the temperature rise, which may damage the catalyst.

To solve such a problem, it is proposed that the aqueous urea or HCs are blocked from penetrating into a converter by providing a retainer on an inner peripheral surface of an exhaust pipe on an upstream side of the converter, as described in, for example, Japanese patent application Kokai publication No. 2011-241732.

In the invention according to the aforementioned patent document, the retainer has to have a larger size (height and range), if the amount of the reductant supplied is increased to improve the performance of the exhaust gas purification device. However, since the retainer and the NOx reduction and purification catalyst are arranged in close contact with each other, the increase in the size of the retainer results in the decrease in area of an opening of the NOx reduction catalyst, and this decrease in area causes decrease in removal ratio and increase in pressure drop. Consequently, the increase in the size of the retainer ends up with the lowering of the performance of the exhaust gas purification device, actually.
US 2009/000287 A1 relates to a flow device for an exhaust treatment system. The flow device includes a base and at least one flow deflector tube secured to the base. The flow deflector tube includes a flow inlet, a flow outlet, and a passage that extends through the flow deflector tube from the flow inlet to the flow outlet. The flow outlet is at an angled orientation to the flow inlet. Both, a baffle plate and an after treatment device are provided inside a housing.

### PRIOR ART DOCUMENT

### PATENT DOCUMENT

Patent Document 1: Japanese patent application Kokai publication No. 2011-241732
Patent Document 2: United States patent application US 2009/000287 A1.

### SUMMARY OF THE INVENTION

### PROBLEM TO BE SOLVED BY THE INVENTION

An object of the present invention is to provide an exhaust gas purification device for a diesel engine in which a NOx reduction and purification catalyst can be prevented from being broken by penetration of a reductant into a supporting member of the catalyst, while improving performance of the catalyst.

### MEANS FOR SOLVING THE PROBLEM

An exhaust gas purification device for a diesel engine of the present invention which achieves the above-described object includes: means for supplying a reductant and a converter which are arranged in this order in an downstream direction in an exhaust pipe of a diesel engine, the converter including a NOx reduction and purification catalyst therein with a supporting member interposed therebetween; and a retainer made of a plate-shaped member provided to stand on an inner surface of the exhaust pipe at a position between the reductant supply means and the NOx reduction and purification catalyst of the converter and to extend in a circumferential direction, wherein the exhaust pipe comprises a first connection pipe, carrying the reductant supply means, and a second connection pipe, which is arranged on a downstream side of the first connection pipe, characterized in that the second connection pipe comprises a straight portion connected to an upstream side of the converter, wherein the retainer stands spaced apart from an upstream end surface of the NOx reduction and purification catalyst on the straight portion of the second connection pipe.

In the above-described exhaust gas purification device for a diesel engine, aqueous urea can be used as the reductant, and an SCR catalyst can be used as a NOx reduction and purification catalyst. Alternatively, unburned fuel may be used as the reductant, and an LNT may be used as the NOx reduction and purification catalyst.

### EFFECTS OF THE INVENTION

According to the exhaust gas purification device for a diesel engine of the present invention, the retainer is spaced from the upstream end surface of the NOx reduction and purification catalyst. Hence, even when the size of the retainer is increased, the retainer does not exert any influence on the amount of the exhaust gas flowing into the NOx reduction and purification catalyst. For this reason, it is possible to prevent the supporting member of the catalyst from being broken by the penetration of the reductant, without lowering the performance of the NOx reduction and purification catalyst.

### BRIEF DESCRIPTION OF THE DRAWINGS

[Fig. 1] Fig. 1 is a cross-sectional view showing a structure of an exhaust gas purification device for a diesel engine according to an embodiment of the present invention.
[Fig. 2] Fig. 2 is a partial cross-sectional view taken along the line X-X in the direction of the arrows X in Fig. 1.
[Fig. 3] Fig. 3 is an enlarged cross-sectional view of the portion indicated by Y in Fig. 1.

### MODES FOR CARRYING OUT THE INVENTION

Hereinafter, embodiments of the present invention will be described with reference to the drawings.

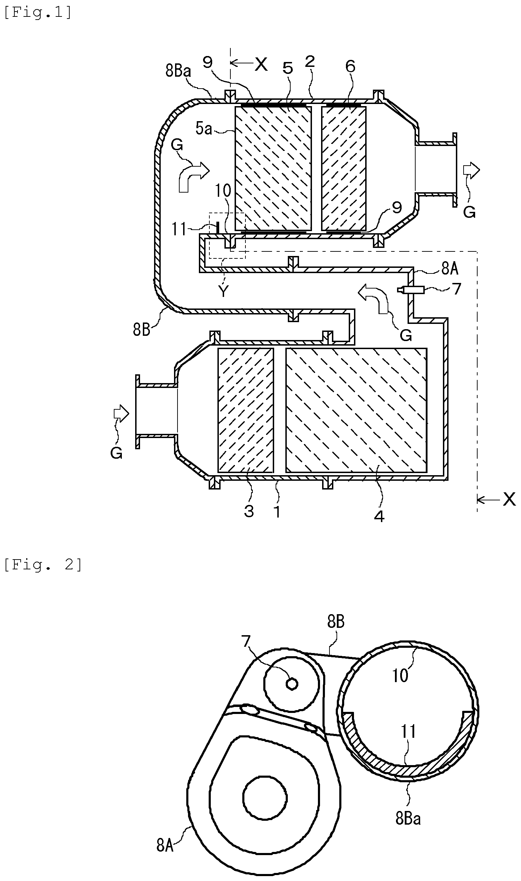

Fig. 1 shows an exhaust gas purification device for a diesel engine according to an embodiment of the present invention.

This exhaust gas purification system includes a cylindrical first converter 1 and a cylindrical second converter 2 provided in this order from an upstream side in series between exhaust pipes (not illustrated) of a diesel engine.

In the first converter 1, a first oxidation catalyst 3 (first DOC 3) and a catalyzed filter 4 (CSF 4) are arranged in series. Meanwhile, in the second converter 2, an SCR catalyst 5 and a second DOC 6 are arranged in series. These first converter 1 and second converter 2 are connected to be located in parallel to each other by a connection pipe 8A provided with an injection nozzle 7 and a substantially U-shaped connection pipe 8B.

The first DOC 3 in the first converter 1 is formed by supporting rhodium, cerium oxide, platinum, aluminum oxide, and the like on a support such as a honeycomb structure. Meanwhile, the CSF 4 is formed by supporting an oxidation catalyst made of a noble metal such as platinum, palladium, or rhodium and an oxidation catalyst for particulate matters (PM) made of cerium oxide or the like on a filter portion of a ceramic honeycomb porous member.

The SCR catalyst 5 in the second converter 2 is formed by supporting titania-vanadia, β-zeolite, chromium oxide, manganese oxide, molybdenum oxide, titanium oxide, or tungsten oxide on a support such as a honeycomb structure. Meanwhile, the second DOC 6 has the same structure as the first DOC 3. These SCR catalyst 5 and second DOC 6 are supported on an inner peripheral surface of the second converter 2, with a supporting member 9 made of a heat-resistant sponge or the like interposed therebetween.

The exhaust gas purification device functions as follows. When exhaust gas G emitted from a diesel engine flows into the first converter 1, hydrocarbons (HC) and carbon monoxide (CO) are decomposed and removed in the first DOC 3. Then, in the CSF 4, PMs are removed, and nitrogen monoxide (NO), which accounts for the great majority of the NOx, is oxidized to form nitrogen dioxide (NO₂). The exhaust gas G flowing out of the first converter 1 carries NH₃ generated by hydrolysis of aqueous urea injected through the injection nozzle 7 in the connection pipe 8A, and flows into the second converter 2 through the connection pipe 8B at the later stage. Then, the exhaust gas G is purified by the removal of NOx owing to the reducing action of NH3 in the SCR catalyst 5, and then released to the outside through an emission pipe (not illustrated). Note that the second DOC 6 prevents NH₃ slip, i.e., the release of NH₃, which is not reacted with NOx but remains intact, to the air.

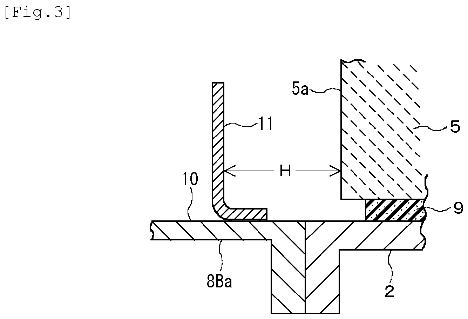

In the exhaust gas purification device, as shown in Figs. 2 and 3, a retainer 11 made of a plate-shaped member is provided to stand on an inner surface 10 of a straight portion 8Ba of the connection pipe 8B connected on an upstream side of the second converter 2 at a position spaced from an upstream end surface 5a of the SCR catalyst 5 and to extend in a circumferential direction.

The retainer 11 is provided, while being spaced from the upstream end surface 5a of the SCR catalyst 5 as described above. Hence, even when the size of the retainer 11 is increased, the retainer 11 does not exert any influence on the amount of the exhaust gas flowing into the NOx reduction and purification catalyst, and the retainer 11 can block the penetration of unhydrolyzed aqueous urea into the second converter 2. For this reason, the SCR catalyst 5 can be prevented from being broken by the penetration of the aqueous urea, without lowering the performance of the SCR catalyst 5.

Note that, in the embodiment shown in Fig. 2, the retainer 11 is provided to stand over a half (180°) of the circumference of the inner surface 10 of the connection pipe 8B. However, the range of the retainer 11 is not limited thereto, but, for example, the retainer 11 may be provided to stand in a part (less than 180°) of the inner surface 10 in the circumferential direction, or may be provided to stand over the entire circumference (360°) of the inner surface 10 to completely prevent the penetration of the aqueous urea.

A distance H between the retainer 11 and the upstream end surface 5a of the SCR catalyst 5 is not particularly limited, because it varies depending on the inner diameter of the connection pipe 8B, the size (height, range) of the retainer 11, and the like. However, the distance H is desirably large enough for the flow of the exhaust gas G disturbed by the retainer 11 to restore its normal state at an entrance of the second converter 3.

In the above-described embodiment, an LNT using HCs as the reductant may be used instead of the SCR catalyst using aqueous urea as the reductant.

### EXPLANATION OF REFERENCE NUMERALS

1 first converter
2 second converter
3 first DOC
4 CSF
5 SCR catalyst
5a upstream end surface
6 second DOC
7 injection nozzle
8A, 8B connection pipes
9 supporting member
10 inner surface
11 retainer

## Claims

1. An exhaust gas purification device for a diesel engine, comprising: means for supplying a reductant (7) and a converter (2) which are arranged in this order in an downstream direction in an exhaust pipe of a diesel engine, the converter (2) including a NOx reduction and purification catalyst (5) therein with a supporting member interposed therebetween; and a retainer (11) made of a plate-shaped member provided to stand on an inner surface of the exhaust pipe at a position between the reductant supply means (7) and the NOx reduction and purification catalyst (5) of the converter (2) and to extend in a circumferential direction, wherein the exhaust pipe comprises a first connection pipe (8A), carrying the reductant supply means (7), and a second connection pipe (8B), which is arranged on a downstream side of the first connection pipe (8A), **characterized in that**
the second connection pipe (8B) comprises a straight portion (8Ba) connected to an upstream side of the converter (2), wherein the retainer (11) stands spaced by a distance H apart from an upstream end surface (5a) of the NOx reduction and purification catalyst (5) on the straight portion (8Ba) of the second connection pipe (8B), the distance H being large enough for the flow of the exhaust gas G disturbed by the retainer (11) to restore its normal state at an entrance of the converter (2).

2. The exhaust gas purification device for a diesel engine according to claim 1, wherein
the reductant is aqueous urea, and the NOx reduction and purification catalyst (5) is an SCR catalyst.

3. The exhaust gas purification device for a diesel engine according to claim 1, wherein
the reductant is unburned fuel, and the NOx reduction and purification catalyst (5) is an LNT.

## Patentansprüche

1. Abgasreinigungsvorrichtung für einen Dieselmotor mit einem Mittel zum Zuführen eines Reduktionsmittels (7) und einem Konverter (2), welche in dieser Reihenfolge in einer stromabwärtigen Richtung in einem Auspuff eines Dieselmotors angeordnet sind, wobei der Konverter (2) im Inneren einen NOx-Reduktions- und Reinigungskatalysator (5) mit einem dazwischen angeordneten Stützteil aufweist, und mit einem aus einem plattenförmigen Element hergestellten Halter (11), welcher dafür vorgesehen ist, auf einer inneren Fläche des Auspuffs in einer Position zwischen dem Reduktionsmittelzuführmittel (7) und dem NOx-Reduktions- und Reinigungskatalysator (5) des Konverters (2) zu stehen und sich in einer Umfangsrichtung zu erstrecken, wobei der Auspuff ein erstes Verbindungsrohr (8A) aufweist, welches das Reduktionsmittelzuführmittel (7) trägt, und ein zweites Verbindungsrohr (8B), welches an einer stromabwärts gelegenen Seite des ersten Verbindungsrohrs (8A) angeordnet ist, **dadurch gekennzeichnet, dass**
das zweite Verbindungsrohr (8B) einen geraden Abschnitt (8Ba) aufweist, welcher mit einer stromaufwärts gelegenen Seite des Konverters (2) verbunden ist, wobei der Halter (11) durch einen Abstand H beabstandet von einer stromaufwärts gelegenen Stirnfläche (5a) des NOx-Reduktions- und Reinigungskatalysators (5) auf dem geraden Abschnitt (8Ba) des zweiten Verbindungsrohrs (8B) steht, wobei der Abstand H groß genug ist, um für den durch den Halter (11) unterbrochenen Fluss des Abgases G seinen normalen Zustand an einem Einlass des Konverters (2) wiederherzustellen.

2. Abgasreinigungsvorrichtung für einen Dieselmotor nach Anspruch 1, wobei
das Reduktionsmittel wässriger Harnstoff ist und der NOx-Reduktions- und Reinigungskatalysator (5) ein SCR-Katalysator ist.

3. Abgasreinigungsvorrichtung für einen Dieselmotor nach Anspruch 1, wobei
das Reduktionsmittel unverbrannter Kraftstoff ist und der NOx-Reduktions- und Reinigungskatalysator (5) ein LNT ist.

## Revendications

1. Un dispositif de purification de gaz d'échappement pour un moteur diesel, comprenant :
un moyen pour fournir un agent de réduction (7) et un convertisseur (2) qui sont agencés dans cet ordre dans une direction aval dans un tuyau d'échappement d'un moteur diesel, le convertisseur (2) incluant un catalyseur de réduction du NOx et de purification (5) dans celui-ci avec un élément de support interposé entre ceux-ci ; et un dispositif de retenue (11) constitué d'un élément en forme de plaque prévu pour reposer sur une surface interne du tuyau d'échappement à une position entre le moyen d'alimentation en agent de réduction (7) et le catalyseur de réduction du NOx et de purification (5) du convertisseur (2) et pour s'étendre dans une direction circonférentielle, le tuyau d'échappement comprenant un premier tuyau de raccordement (8A), portant le moyen d'alimentation en agent de réduction (7), et un deuxième tuyau de raccordement (8B), lequel est agencé sur un côté aval du premier tuyau de raccordement (8A), **caractérisé en ce que**
le deuxième tuyau de raccordement (8B) comprend une partie droite (8Ba) raccordée à un côté amont du convertisseur (2), le dispositif de retenue (11) reposant espacé d'une distance H d'une surface d'extrémité amont (5a) du catalyseur de réduction du NOx et de purification (5) sur la partie droite (8Ba) du deuxième tuyau de raccordement (8B), la distance H étant suffisamment grande pour que l'écoulement du gaz d'échappement G perturbé par le dispositif de retenue (11) revienne à son état normal au niveau d'une entrée du convertisseur (2).

2. Le dispositif de purification de gaz d'échappement pour un moteur diesel selon la revendication 1, dans lequel
l'agent de réduction est de l'urée aqueuse, et le catalyseur de réduction du NOx et de purification (5) est un catalyseur SCR.

3. Le dispositif de purification de gaz d'échappement pour un moteur diesel selon la revendication 1, dans lequel
l'agent de réduction est un carburant non brûlé, et le catalyseur de réduction du NOx et de purification (5) est un LNT.
